# EUROPEAN PATENT SPECIFICATION

(11) **EP 1 645 528 B1**
(45) Date of publication and mention of the grant of the patent: **08.08.2007**
(21) Application number: 05020175.5
(22) Date of filing: 16.09.2005
(51) Int. Cl.: B65G 17/38, F16G 13/06

(54) **Conveyor chain**
Förderkette
Chaine de convoyeur

(30) Priority: 05.10.2004 JP 2004292837
(43) Date of publication of application: 12.04.2006
(73) Proprietor: Tsubakimoto Chain Co., Kita-ku Osaka 530-0005 (JP)
(72) Inventor: Tanimura, Makoto, 3-3-3, Nakanoshima Kita-ku Osaka 530-0005 (JP)
(74) Representative: Patentanwälte Hosenthien-Held und Dr. Held

(56) References cited:
- EP-A- 0 601 469
- EP-A- 0 864 776

## Description

The present invention relates to a conveyor chain used in a conveyor, and more specifically relates to a molten, water-pulverized slag conveying conveyor chain, which conveys molten slag discharged from a blast furnace and water-pulverized slag obtained by rapidly cooling molten slag by injecting pressurized water to the molten slag.

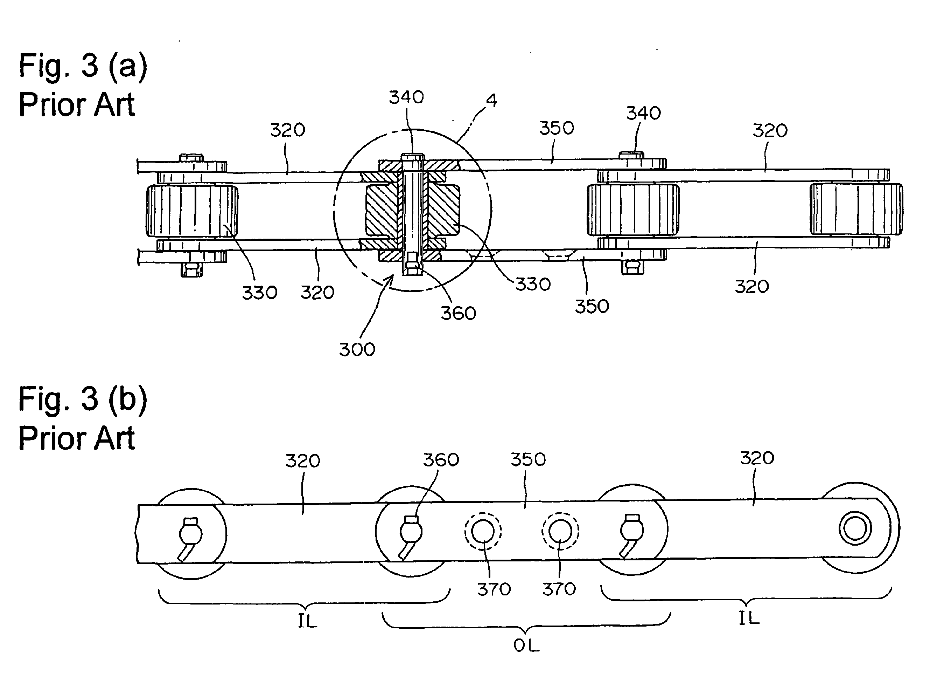

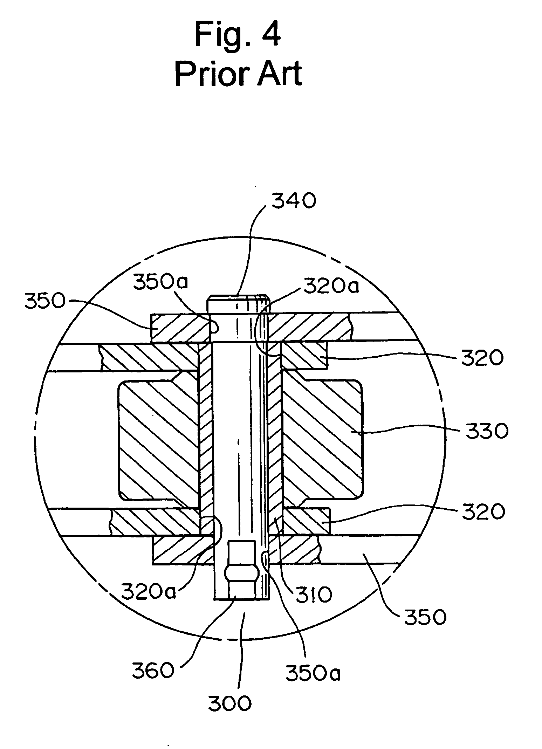

Compositions other than iron in iron ore melted in a blast furnace, which produce pig iron, are separated and recovered as slag together with ash content in limestone and corks of auxiliary materials. As a conveyor chain, which conveys this slag, a roller chain 300 as shown in FIGS. 3(a), 3(b) and 4 has been widely used. Here, FIG. 3(a) shows a partially cross-sectional front view for clearly showing a structure of the inside, FIG. 3(b) shows its side view, and FIG. 4 is a principal portion cross-sectional view.

This roller chain 300 comprises an inner link IL in which both ends of two bushes 310 are respectively press-fitted into bush holes 320a engraved into a pair of inner link plates 320 and which has a rotatable roller 330 on the outside of the bush 310, and an outer link OL in which both ends of two connecting pins 340 loosely penetrated into the bushes 310 of adjacent the inner links 320 are respectively press-fitted into pin holes 350a engraved into a pair of outer link plates 320 disposed on both outsides of the pair of inner link plates 320, the inner links IL and said outer links OL being alternately flexibly connected to each other with connecting pins 340. It is noted that a member denoted by the reference numeral 360 is a T pin for preventing disengagement of the connecting pin 340. Further, a hole denoted by the reference numeral 370 denotes a screw hole for attaching a slag conveying attachment (see for example Japanese Laid-open Patent Publication No. Hei. 10-250818 = EP0864776).

However, when the above-mentioned roller chain is used as a molten, water-pulverized slag conveying conveyor chain, fine powders of slag enter a small gap between the inner link plate 320 and the outer link plate 350. As a result it has been pointed out that the entered fine powders block smooth rotation of the roller and additionally fine powders adhered to the outer circumferential surface of the bush 310 and the inner circumferential surface of the roller 330 wear and corrode a sliding contact surface between the bush 310 and the roller 330.

The EP 0 601 469 A discloses a conveyor chain with permanent lubrication of rollers. The chain is formed by inner link assemblies and outer link assemblies being alternately connected with each other.

An outer link assembly is formed by two adjacent connecting pins, two opposing outer link plates being press fitted on the pins, and the corresponding four (outer) lids - two for each connecting pin being press fitted on the pins on the inner sides of the outer link plates. The inner link assembly is formed by two adjacent bushes, wherein the first is in contact with the first one of said connecting pins and the second one is arranged on the side being opposite to the side of the second pin, two opposing inner link plates being press fitted on the bushes, and four sealing elements (V-rings) being press fitted on the outer surface of the bushes. Each bush is arranged within the bore of a roller, wherein lubrication oil is provided, so that the rollers can rotate around the bushes with very low friction. The inner link assemblies and the outer link assemblies are alternately and flexibly connected to each other with said connecting pins being inserted in the bushes, wherein lubrication oil is provided between the opposing surfaces. The sealing elements in combination with the lids prevent the oil from leaking. Depending on the position of the bush in respect of the respective outer link plate, the sealing element can extend in longitudinal direction further than the bush so that is always engages with its elastic protruding lip said lid being being part of the outer link assembly.

According to the EP 0 601 469 A1, the bush has step portions wherein the outer diameter of the bush is reduced to provide seats first for the inner link plate (first step) and second for the sealing element (second step) being in contact with the outer side face of the inner link plate. Each second step portion extends slightly over the sealing element being seated thereon to provide a proper seating for the sealing element. Further, the protruding bush portion protects the elastic protruding lip of the sealing element from being deformed too much in axial direction and thus protects the function of the sealing element. A second protection means is being provided by the contact of the end of the axial extending outer part of the lid being part of an outer link assembly with the side surface of the inner link plate. For this purpose, each lid has a radial extending inner part being in contact with the lip of the sealing element, and an axial extending outer part extending in direction of the inner link plate.

So, in one end position the bush contacts with its end face the lid. Further, there are contact areas between the end surface of the lid and the inner link plate, and between the lip of the sealing element and the side face of the lip. Because of the complicated structure such a lubricated conveyor chain is more complicated and thus more expensive to produce than the not lubricated roller chain shown in Figs. 3(a), 3(b) and 4 and described above as relevant state of the art.

Accordingly, the object of the present invention is to solve the above-mentioned problems to be addressed by a conventional conveyor chain and to provide a conveyor chain in which rotation failure of the roller is suppressed and at the same time the wear life between a bush and a roller is improved.

The above-mentioned problems can be solved by a conveyor chain of the invention according to claim 1 comprising an inner link in which both ends of two bushes are respectively press-fitted into bush holes engraved into a pair of inner link plates and which has a rotatable roller on the outside of said bush, and an outer link in which both ends of two connecting pins loosely penetrated into said bushes of adjacent said inner links are respectively press-fitted into pin holes engraved into a pair of outer link plates disposed on both outsides of said pair of inner link plates, said inner links and said outer links being alternately flexibly connected to each other with connecting pins, characterized in that said bush has thin-walled step portions each slightly longer than the thickness of said inner link plate on both end portions and is press-fitted into said bush holes engraved in said inner link plates so that the end portions of the step portions are protruded on the outer link plate side and the contact area between inner link and the outer link is reduced in case of the roller being in an outermost position such that only the end surface of the stepped portions and the outer link plates are in contact, and a small gap is formed between said inner link plate and said outer link plate, and that the space between the inner circumferential surface of said roller and the outer circumferential surface of said bush is set to an average gap, which is substantially twice the same size standard setting average gap.

Here, the same size standard setting average gap means an average clearance between a bush and a roller, set as a standard value per a size of the chain. For example, in a 10 ton-size chain the gap is 0.73 mm, in a 12 ton-size chain the gap is 0.74 mm, and in 17 ton-size and 26 ton-size chains the gap is 0.85 mm.

According to the invention, since in conveyor chain comprising an inner link in which both ends of two bushes are respectively press-fitted into bush holes engraved into a pair of inner link plates and which has a rotatable roller on the outside of said bush, and an outer link in which both ends of two connecting pins loosely penetrated into said bushes of adjacent said inner links are respectively press-fitted into pin holes engraved into a pair of outer link plates disposed on both outsides of said pair of inner link plates, said inner links and said outer links being alternately flexibly connected to each other with connecting pins, said bush has thin-walled step portions each slightly longer than the thickness of said inner link plate on both end portions and is press-fitted into said bush holes engraved in said inner link plates so that the end portions of the step portions are protruded on the outer link plate side, and a small gap is formed between said inner link plate and said outer link plate, residence of the slag entered between the inner link plate and the outer link plate is suppressed so that flexion failure of the chain due to adhesion of the slag is prevented.

Further, since the bush is a stepped bush, the connection between the inner link plate and the bush is strengthened and at the same time the outer diameter of the bush is increased. Thus, an allowable load for the roller can be more increased than a conventional case so that endurance of the chain is improved. Further, since the diameter of a sliding portion between the bush and the roller becomes larger than the outer diameter of an engagement portion of the inner link plate and the bush, the rotation resistance of the roller is suppressed and wear resistance is improved by a synergetic effect between an increase in bearing pressure resistance due to an increase a contact area and an increase in wear margin due to an increase in a wall thickness.

Further, since the space between the inner circumferential surface of the roller and the outer circumferential surface of the bush is set to an average gap, which is substantially twice the same size standard setting average gap, discharge of slag entered between the roller and the bush is easily carried out and rotation failure of the roller due to adhesion of slag is prevented.

The conveyor chain of the present invention can be produced without use of a special production facility and expensive materials. Further, in the present invention, an increased life and a smooth flexible movement of the conveyor chain can be realized by a simple method of adjusting clearances between a roller and a bush and between an outer link plate and an inner link plate. Thus the industrial applicability of the present invention is significantly large.
- FIG. 1 (a): is a partially cross-sectional plan view for clearly showing an inside of a conveyor chain according to the present invention,
- FIG. 1 (b): shows a side view of the conveyor chain shown in FIG. 1 (a),
- FIG. 2: is an enlarged cross-sectional view of a principal portion of the conveyor chain shown in FIGs 1(a) and 1(b).
- FIG. 3(a) and FIG. 3(b): are respectively a plan view and a side view of a conveyor chain, which is a conventional example.
- FIG. 4: is an enlarged cross-sectional view of a principal portion of the conveyor chain shown in FIGs 3(a) and 3(b).

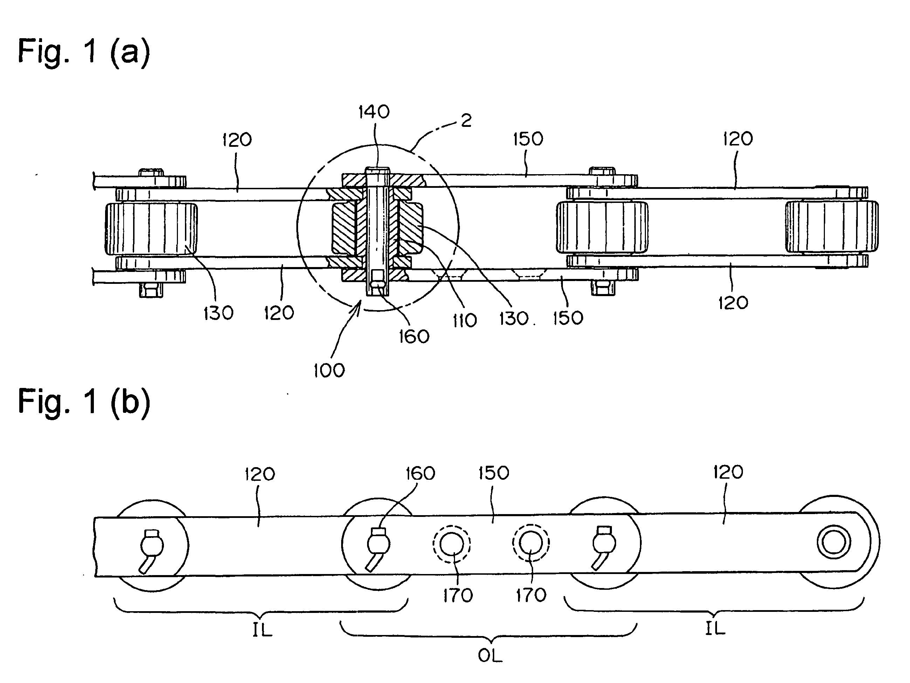

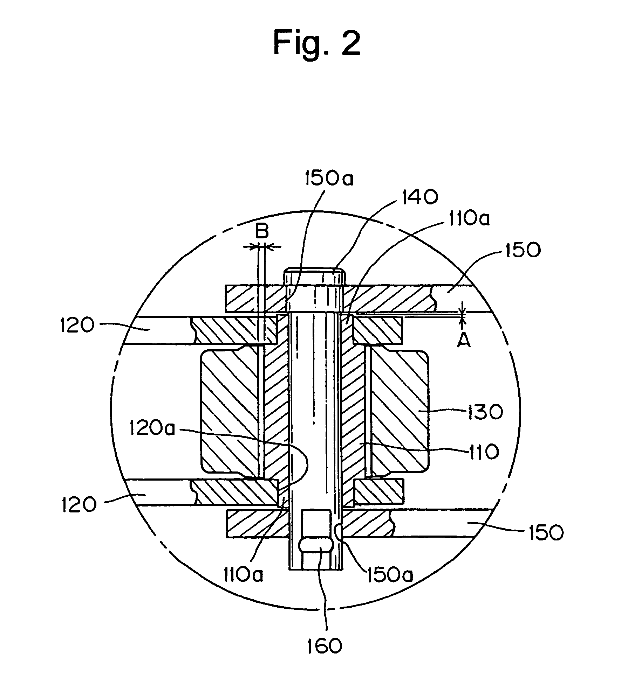

In a 17 ton-size roller chain 100 shown in FIGS. 1 (a), 1 (b) and 2, a pitch between connecting pins is 200 mm, an outer diameter of a roller is 80 mm, a height of an inner link plate is 50.8 mm, and an inner width between the inner link plates is 49.4 mm. The roller chain 100 comprises an inner link IL in which both ends of two bushes 110 are respectively press-fitted into bush holes 120a engraved into a pair of inner link plates 120 and which has a rotatable roller 130 on the outside of the bush 110, and an outer link OL in which both ends of two pins 140 loosely penetrated into the bushes 110 of adjacent the inner links IL are respectively press-fitted into pin holes 150a engraved into a pair of outer link plates 150 disposed on both outsides of the pair of inner link plates 120, and the conveyor chain 100 has such a construction that the inner links IL and said outer links OL are alternately flexibly connected to each other with connecting pins 140. It is noted that a member denoted by the reference numeral 160 is a T pin for preventing disengagement of the pin 140. Further, a hole denoted by the reference numeral 170 denotes a screw hole for attaching a slag conveying attachment.

The bush 110 has thin-walled step portions 110a each slightly longer than the thickness of the inner link plate 120 on both end portions and is press-fitted into the bush holes 120a engraved in the inner link plates 120 so that the end portions of the step portions 110a are protruded on the outer link plate 150 side. As mentioned above, since the end portions of the stepped portions 110a are protruded on the outer link plate 150 side, a small gap A is formed between the inner link plate 120 and the outer link plate 150 so that the contact between the links is avoided, residence of the slag entered between the inner link plate 120 and the outer link plate 150 is suppressed so that flexion failure of the chain due to adhesion of the slag is reduced.

The space (gap B) between the inner circumferential surface of the roller 130 and the outer circumferential surface of the bush 110 is set to an average gap, which is substantially twice the same size standard setting average gap. Specifically, in a 10 ton-size chain, the gap B is set to 1.53 mm, which corresponds to 2.10 times of the standard setting average gap, in a 12 ton-size chain, the gap B is set to 1.54 mm, which corresponds to 2.08 times of the standard setting average gap, and in 17 ton-size and 26 ton-size chains, the gap B is set to 1.75 mm, which corresponds to 2.06 times of the standard setting average gap. These differences are influenced by tolerances in size designing. If the gap B is an average gap, which is substantially two times of the standard setting average gap, it is not limited particularly.

As mentioned above, by increasing the gap B between the inner circumferential surface of the roller 130 and the outer circumferential surface of the bush 110, discharging of slag entered between the roller 130 and the bush 110 becomes easy and rotation failure of the roller is reduced.

### REFERENCE NUMBERS

100, 300 Conveyor chain
110, 310 Bush
110a Step portion
120, 320 Inner link plate
120a, 320a Bush hole
130, 330 Roller
140, 340 Connecting pin
150, 350 Outer link plate
160, 360 T pin
170, 370 Screw hole
A Gap
B Gap
IL Inner link
OL Outer link

## Claims

1. Conveyor chain comprising an inner link (IL) in which both ends of two bushes (110) are respectively press-fitted into bush holes (120a) engraved into a pair of inner link plates (120) and which has a rotatable roller (130) on the outside of the bush (110), and an outer link (OL) in which both ends of two connecting pins (140) loosely penetrated into the bushes (110) of adjacent said inner links (IL) are respectively press-fitted into pin holes engraved into a pair of outer link plates (150) disposed on both outsides of the pair of inner link plates (120), the inner links (IL) and the outer links (OL) being alternately flexibly connected to each other with connecting pins (140), **characterized in that**
the bush (110) has thin-walled step portions (110a) each slightly longer than the thickness of said inner link plate (120) on both end portions and is press-fitted into the bush holes (120a) engraved in said inner link plates (120) so that the end portions of the step portions (110a) are protruded on the outer link plate side and the contact area between inner link (IL) and the outer link (OL) is reduced in case of the roller (130) being in an outermost position such that only the end surface of the stepped portions (110a) and the outer link plates (150) are in contact, and a small gap (A) is formed between the inner link plate (120) and the outer link plate (150).

2. Conveyor chain according to claim 1, **characterized in that** the thin-walled step portions (110a) have a wall thickness being about half of the wall thickness of the middle portion of the bush (110),

3. Conveyor chain according to claim 1 or 2, **characterized in that** a space (B) between the inner circumferential surface of the roller (130) and the outer circumferential surface of the bush (110) is set to an average gap, which is about twice, i.e. 1.90 to 2.10 times, the size of the standard setting average gap.

4. Conveyor chain according to any of claims 1 to 3, **characterized in that** T-pins (160) are provided for preventing disengagement of the pins (140).

5. Conveyor chain according to any of claims 1 to 4, **characterized in that** the gap (B) between the inner circumferential surface of the roller (130) and the outer circumferential surface of the bush (110) is set to 0.73 mm +/- 5% in case of a 10 ton-size conveyor chain (100), to 0,74 mm +/- 5% in case of a 12 ton-size conveyor chain (100) and to 0,85 mm +/- 5% in case of a 17 ton- to 26 ton-size conveyor chain (100).

6. Conveyor chain according to any of claims 1 to 5, **characterized in that** in case of a 17 ton-size conveyor chain (100) the pitch between connectin pins (140) is 200 mm +/- 5%, the outer diameter of a roller (130) is 80 mm +/- 5%, the height of an inner link plate (120) is 50.8 mm +/- 5% and the inner width between the inner link plates (120) is 49.4 mm +/- 5%.

## Patentansprüche

1. Förderkette, aufweisend ein Innenglied (IL), bei dem beide Enden von zwei Buchsen (110) jeweils in Buchsenöffnungen (120a) eingepresst sind, die in einem Paar innerer Verbindungsplatten (120) eingeprägt sind, und die eine drehbare Rolle (130) auf der Außenseite der Buchse (110) hat, und ein Außenglied (OL), bei dem beide Enden von zwei Verbindungsstiften (140), die locker durch die Buchsen (110) benachbarter besagter Innenglieder (IL) dringen, jeweils in Stiftöffnungen eingepresst sind, die in ein Paar äußerer Verbindungsplatten (150) eingeprägt sind, die auf beiden Außenseiten des Paares von inneren Verbindungsplatten (120) angeordnet sind, wobei die Innenglieder (IL) und die Außenglieder (OL) abwechselnd verschwenkbar miteinander verbunden sind mittels Verbindungsstiften (140), **dadurch gekennzeichnet, dass**
die Buchse (110) dünnwandige Stufenbereiche (110a) in beiden Endbereichen hat, wobei jeder etwas länger als die Dicke der besagten inneren Verbindungsplatte (120) ist und in die Buchsenöffnungen (120a) eingepresst ist, die in besagte innere Verbindungsplatten (120) eingeprägt sind, so dass die Endbereiche der Stufenbereiche (110a) auf der äußeren Verbindungsplattenseite überstehen und die Kontaktfläche zwischen dem Innenglied (IL) und dem Außenglied (OL) begrenzt ist im Falle, dass die Rolle (130) in einer äußersten Stellung ist, so dass nur die Endfläche der Stufenbereiche (110a) und der äußeren Verbindungsplatten (150) in Kontakt sind, und ein enger Spalt (A) zwischen der inneren Verbindungsplatte (120) und der äußeren Verbindungsplatte (150) ausgebildet ist.

2. Förderkette nach Anspruch 1, **dadurch gekennzeichnet, dass** die dünnwandigen Stufenbereiche (110a) eine Wanddicke haben, die etwa der Hälfte der Wanddicke des mittleren Bereichs der Buchse (110) entspricht.

3. Förderkette nach Anspruch 1 oder 2, **dadurch gekennzeichnet, dass** ein Raum (B) zwischen der inneren Umfangsfläche der Rolle (130) und der äußeren Umfangsfläche der Buchse (110) als mittlerer Spalt eingestellt ist, der etwa zweimal, d.h. 1,90-bis 2,10-mal, so groß wie der standardmäßig eingestellte mittlere Spalt ist.

4. Förderkette nach einem der Ansprüche 1 bis 3, **dadurch gekennzeichnet, dass** T-Stifte (160) vorgesehen sind, um ein Lösen der Stifte (140) zu verhindern.

5. Förderkette nach einem der Ansprüche 1 bis 4, **dadurch gekennzeichnet, dass** der Spalt (B) zwischen der inneren Umfangsfläche der Rolle (130) und der äußeren Umfangsfläche der Buchse (110) im Falle einer Förderkette für 10 Tonnen auf 0,73 mm +/- 5%, im Falle einer Förderkette (100) für 12 Tonnen auf 0,74 +/- 5%, und im Falle einer Förderkette (100) für 17 bis 26 Tonnen auf 0,85 mm +/- 5% eingestellt ist.

6. Förderkette nach einem der Ansprüche 1 bis 5, **dadurch gekennzeichnet, dass** im Falle einer Förderkette (100) für 17 Tonnen die Teilung zwischen den Verbindungsstiften (140) 200 mm +/- 5% ist, der Außendurchmesser einer Rolle (130) 80 mm +/-5% ist, die Höhe einer inneren Verbindungsplatte (120) 50,8 mm +/- 5% ist, und der innere Abstand zwischen inneren Verbindungsplatten (120) 49,4 mm +/- 5% ist.

## Revendications

1. Chaîne de convoyeur comprenant un maillon interne (IL) dans lequel les deux extrémités de deux douilles (110) sont respectivement emmanchées dans des trous de douille (120a) gravés dans une paire de plaques internes (120) et qui présente un rouleau rotatif (130) à l'extérieur de la douille (110), un maillon externe (OL) dans lequel les deux extrémités de deux axes de liaison (140) pénétrant avec du jeu dans les douilles (110) desdits maillons internes (IL) adjacents sont respectivement emmanchées dans des trous d'axe gravés dans une paire de plaques externes (150) disposées sur les deux côtés extérieurs de la paire de plaques internes (120), les maillons internes (IL) et les maillons externes (OL) étant reliés l'un à l'autre de manière alternativement flexible avec des axes de liaison (140), **caractérisée en ce que**
la douille (110) présente des parties étagées (110a) à paroi mince dont chacune est légèrement plus longue que l'épaisseur de ladite plaque interne (120) sur les deux parties d'extrémité et est emmanchée dans les trous de douille (120a) gravés dans lesdites plaques internes (120) de sorte que les parties d'extrémité des parties étagées (110a) sont en saillie sur le côté de la plaque externe et la zone de contact entre le maillon interne (IL) et le maillon externe (OL) est réduite dans le cas où le rouleau rotatif (130) se trouve dans une position la plus éloignée de sorte que seule la surface d'extrémité des parties étagées (110a) et les plaques externes (150) sont en contact, et qu'un petit espace (A) est formé entre la plaque interne (120) et la plaque externe (150).

2. Chaîne de convoyeur selon la revendication 1, **caractérisée en ce que** les parties étagées (110a) à paroi mince présentent une épaisseur de paroi environ égale à la moitié de l'épaisseur de paroi de la partie du milieu de la douille (110).

3. Chaîne de convoyeur selon la revendication 1 ou 2, **caractérisée en ce qu'**un espace (B) entre la surface circonférentielle interne du rouleau (130) et la surface circonférentielle externe de la douille (110) est réglé à un espace moyen qui a environ deux fois, c'est-à-dire entre 1,90 et 2,10 fois, la taille de l'espace moyen standard.

4. Chaîne de convoyeur selon l'une quelconque des revendications 1 à 3, **caractérisée en ce que** des goupilles en T (160) sont disposées pour empêcher la sortie de prise des axes (140).

5. Chaîne de convoyeur selon l'une quelconque des revendications 1 à 4, **caractérisée en ce que** l'espace (B) entre la surface circonférentielle interne du rouleau (130) et la surface circonférentielle externe de la douille (110) est réglé à 0,73 mm +/- 5 dans le cas d'une chaîne de convoyeur (100) de 10 tonnes, à 0,74 mm +/- 5 % dans le cas d'une chaîne de convoyeur (100) de 12 tonnes et à 0,85 mm +/- 5 % dans le cas de chaînes de convoyeur (100) entre 17 et 26 tonnes.

6. Chaîne de convoyeur selon l'une quelconque des revendications 1 à 5, **caractérisée en ce que** dans le cas d'une chaîne de convoyeur (100) de 17 tonnes, le pas entre les axes de liaison (140) est de 200 mm +/- 5 %, le diamètre extérieur d'un rouleau (130) est de 80 mm +/- 5 %, la hauteur d'une plaque interne (120) est de 50,8 mm +/- 5 % et la largeur interne entre les plaques internes (120) est de 49,4 mm +/- 5 %.
